# EUROPÄISCHE PATENTSCHRIFT

(11) **EP 0 742 173 B1**
(45) Veröffentlichungstag und Bekanntmachung des Hinweises auf die Patenterteilung: **08.12.1999**
(21) Anmeldenummer: 96105688.4
(22) Anmeldetag: 11.04.1996
(51) Int. Cl.: C01B 15/12

(54) **Verfahren zur Herstellung von abriebfestem Natriumperborat-monohydrat mit hoher Schüttdichte und hoher Lösegeschwindigkeit**
Process for the preparation of abrasion-resistant sodium perborate monohydrate with high apparent density and high solubility
Procédé de préparation du perborate de sodium monohydraté résistant à l'abrasion de densité apparente et solubilité élevées

(30) Priorität: 10.05.1995 DE 19516609
(43) Veröffentlichungstag der Anmeldung: 13.11.1996
(73) Patentinhaber: Degussa-Hüls Aktiengesellschaft, 60287 Frankfurt am Main (DE)
(72) Erfinder: Pelgrims, Ivan, 2550 Kontich (BE); Klasen, Claas-Jürgen, Dr., 63579 Freigericht (DE)

(56) Entgegenhaltungen:
- DE-A- 2 650 225
- DE-C- 3 941 851
- JOURNAL OF CRYSTAL GROWTH, SEPT. 1989, NETHERLANDS, Bd. 97, Nr. 2, ISSN 0022-0248, Seiten 375-386, XP002010930 CHIANESE A ET AL: "The growth and dissolution of sodium perborate crystals in a fluidized bed crystallizer"

## Beschreibung

Die Erfindung richtet sich auf ein Verfahren zur Herstellung von Natriumperborat-monohydrat in Form eines Granulats, das bei hohem Aktivsauerstoffgehalt gleichzeitig eine hohe Abriebbeständigkeit, eine hohe Schüttdichte und eine hohe Lösegeschwindigkeit aufweist.

Zur Herstellung von Natriumperborat-monohydrat der Formel NaBO₃ · H₂O sind unterschiedliche Verfahren bekannt. Die Stoffeigenschaften des Natriumperborat-monohydrats hängen in erheblichem Umfang vom verwendeten Verfahren ab.

Ein technisch genutztes Verfahrensprinzip beruht auf der Umsetzung von Natriummetaborat mit Wasserstoffperoxid in wäßriger Phase und Kristallisation des Natriumperborattetrahydrats. Anschließend wird das Natriumperborattetrahydrat in einer Wirbelschicht zu Natriumperboratmonohydrat dehydratisiert.

Das durch Kristallisationsverfahren mit anschließender Dehydratisierung der vorgenannten Art gewonnene Natriumperborat-monohydrat weist einen befriedigenden Aktivsauerstoffgehalt (Oₐ) von etwa 15 - 16 % auf. Die Morphologie des Monohydrats wird maßgeblich durch das Agglomerisationsverhalten von Primärkristallen bestimmt. Der Kristallaufbau bedingt einerseits eine erwünschte hohe Lösegeschwindigkeit, andererseits aber eine relativ niedrige Schüttdichte (in der Regel kleiner als 600 g/l) und oft hohen Abrieb, der Probleme bei der pneumatischen Förderung verursachen kann. Durch spezielle Bedingungen während der Dehydratisierung, etwa eine Einstellung der relativen Feuchte der Trocknungsluft auf 40 - 80 % (DE-PS 22 58 319) läßt sich der Abrieb des Monohydrats verbessern, nicht aber die Schüttdichte. Durch Walzenkompaktierung des so gewonnenen Natriumperborat-monohydrats, etwa gemäß EP-A 0 573 797, läßt sich zwar die Schüttdichte erhöhen, ohne die Lösegeschwindigkeit nennenswert zu erniedrigen, jedoch verteuert dieser Schritt das Gesamtverfahren erheblich.

Ein weiteres Verfahrensprinzip zur Herstellung von Natriumperborat-monohydrat, das zu einem Produkt mit guter Abriebfestigkeit führt, besteht darin, in eine Wirbelschicht, die Keime enthält, deren Abmessungen geringer sind als die des herzustellenden Produkts, eine wäßrige Wasserstoffperoxidlösung und eine wäßrige Natriummetaboratlösung oder ein Gemisch dieser Lösungen einzuführen und das eingebrachte Wasser zu verdampfen. Bezüglich unterschiedlicher Ausführungsformen dieses Verfahrens wird auf die DE-PS 26 50 225 verwiesen.

Der Aufbau des nach den vorerwähnten Wirbelschichtverfahren hergestellten Natriumperborat-monohydrats ist im wesentlichen kugelig und dicht. Trotz eines befriedigenden Oₐ-Gehalts und einer hohen Abriebbeständigkeit weisen nach diesem Verfahrensprinzip hergestellte Produkte einen anwendungstechnischen Nachteil auf, indem die Lösegeschwindigkeit gegenüber durch Kristallisation gewonnenen Produkten wesentlich verringert ist. Dies führt dazu, daß bei der Verwendung dieser Produkte als Waschmittelbleichkomponente in der Waschlauge der Aktivsauerstoff nur mit Verzögerung aus dem Natriumperborat-monohydrat freigesetzt wird. Um diesem Nachteil abzuhelfen, wird gemäß DE-OS 28 13 326 (Zusatzpatent zur oben genannten DE-PS 26 50 225) ein oberflächenaktives Mittel in die in die Wirbelschicht zu versprühende H₂O₂- oder Metaboratlösung eingebracht.

Hierdurch konnte die Lösezeit zwar verkürzt werden, jedoch konnten nicht die kurzen Lösezeiten erzielt werden, welche von aus Natriumperborat-tetrahydrat gewonnenem Monohydrat (unter 2 Minuten für 95 % gelöstes Material) bekannt waren.

Hierzu wird auf die DE-OS 28 13 326, Seite 9, verwiesen: Dort werden Beispiele von Monohydrat-Aufbaugranulaten mit und ohne Zugabe von Tensiden mit ihren entsprechenden Löseseiten aufgeführt. Die Lösezeit wurde konduktometrisch bei 15 °C gemessen und beträgt 15 Minuten für 95 % gelöstes Material.

Das DE-Patent 39 41 851 lehrt ein Verfahren zur Herstellung von Natriumperborat-monohydrat mit einem Aktivsauerstoffgehalt von 14 bis 16 Gew. -%, einem Abriebindex nach ISO 5937 von nicht mehr als 10 % und einer Lösezeit von unter 1,5 Minuten. Das Verfahren umfaßt eine Walzenkompaktierung von durch Sprühtrocknung hergestelltem im wesentlichen amorphen sehr feinteiligen Natriumperboratmonohydrat.

Aufgabe der Erfindung ist somit, ein weiteres Verfahren zur Herstellung von Natriumperborat-monohydrat in Form eines Granulats mit der Eigenschaftskombination (a) Aktivsauerstoffgehalt (Oₐ) von mindestens 14 Gew.-%, (b) Schüttgewicht nach ISO 3424 von mindestens 600 g/l, (c) Abriebindex nach ISO 5937 von weniger als 8 % und (d) Lösezeit bei 15 °C in Wasser für 95 % bei einer Einsatzmenge von 2 g/l von weniger als 2 Minuten aufzuzeigen.

Das erfindungsgemäße Verfahren zur Herstellung von Natriumperboratmonohydrat mit der genannten Eigenschaftskombination erfolgt durch Besprühen von Natriumperborat-monohydratpartikeln, die kleiner sind als diejenigen des herzustellenden Granulats, in einer Wirbelschicht bei einer Wirbelschichttemperatur im Bereich von 40 bis 95 °C mit einer durch Zusammenführen und Mischen einer wäßrigen Wasserstoffperoxidlösung mit einer wäßrigen Natriummetaboratlösung hergestellten wäßrigen Natriumperboratlösung und gleichzeitigem Verdampfen von Wasser und ist dadurch gekennzeichnet, daß man die wäßrige Natriumperboratlösung 15 bis 120 Sekunden nach dem Zusammenführen der Wasserstoffperoxid- und der Natriummetaboratlösung versprüht.

Erhältlich ist auch ein Natriumperborat-monohydrat mit (a) einem Oₐ-Gehalt von 15 bis 16 Gew.-%, (b) einem Schüttgewicht von mindestens 700 g/l, (c) einem Abriebindex von weniger als 5 % und (d) einer Lösezeit von weniger als 2 Minuten. Überraschenderweise weisen erfindungsgemäß erhältliche Produkte trotz kurzer Lösezeit, entsprechend hoher Lösegeschwindigkeit, eine unerwartet niedrige spezifische Oberfläche auf. Die spezifische Oberfläche (BET (N₂) nach DIN 66133) beträgt weniger als 5 m²/g, vorzugsweise weniger als 4 m²/g. Die BET-Bestimmung erfolgt dabei an zuvor im Hochvakuum bei Raumtemperatur entgasten Proben. Der Oₐ-Gehalt des Monohydrats beträgt üblicherweise 14 bis 16 %, vorzugsweise 15 bis 16 %.

Bestimmung der Lösezeit: Die Lösezeit gibt die Zeit an, in der 95 % von 2 g der eingesetzten Natriumperboratprobe pro 1 Wasser bei 15 °C gelöst werden. Gemessen wird diese Zeit über die Änderung der elektrischen Leitfähigkeit. Zur Bestimmung wird eine thermostatisierte Meßzelle aus Glas (D: = 90 mm, H₁ = 150 mm) verwendet. Während der Bestimmung wird mit einem 4 Flügel-Rührer mit 340 ± 5 Umdrehungen pro Minute gerührt.

Das Schüttgewicht beträgt erfindungsgemäß über 600 g/l, vorzugsweise über 700 g/l und liegt in der Regel zwischen oberhalb 700 g/l und 1000 g/l.

Das Verfahrensprinzip ist aus der genannten DE-PS 26 50 225 bekannt. Zweckmäßigerweise erfolgt das Versprühen der Lösung unter Verwendung von Zweistoffdüsen mit vorzugsweise Luft als Treibmittel. Der Düse ist eine Vorrichtung zum Zusammenführen der Lösungen vorgeschaltet, welche derart ausgestaltet ist, daß die erforderliche Kontaktzeit eingestellt werden kann.

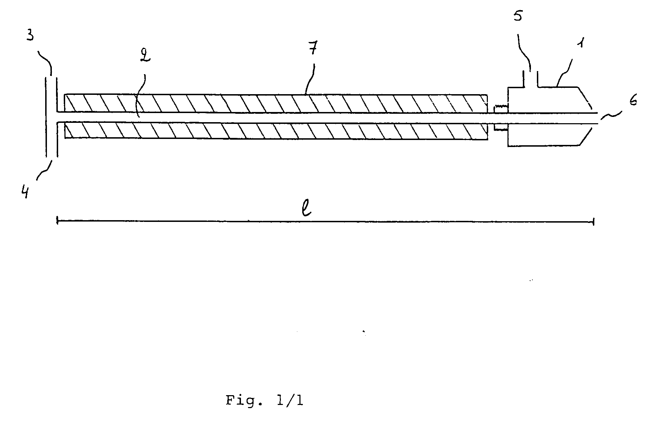

Eine geeignete Ausführungsform zeigt Figur 1/1. Hierin bedeuten: 1 Düse, 2 Mischvorrichtung, hier als Mischrohr ausgebildet, 3 und 4 Zufuhrstutzen für die H₂O₂-Lösung und Metaboratlösung, 5 Zufuhrstutzen für das Treibgas, 6 Düsenaustritt, 7 Thermostatisiervorrichtung für das Mischrohr. Durch die Länge l - Abstand zwischen dem Ort des Zusammenführens der Lösungen und Austritt der Perboratlösung aus der Düse - und den Durchfluß pro Zeiteinheit läßt sich bei gegebenem Querschnitt des Mischrohrs (2) die Kontaktzeit einstellen. Soweit erwünscht, kann die Mischvorrichtung auch mit Static-Mixer-Einbauten ausgestattet sein. Um eine Kristallisation in der Mischvorrichtung zu vermeiden, wird diese zweckmäßigerweise thermostatisiert - vorzugsweise auf mindestens 40 °C. Anstelle eines Mischrohrs gemäß Figur 1/1 lassen sich auch der Düse vorgeschaltete Mischkammern verwenden.

Die Konzentration der zu versprühenden Natriumperboratlösung kann zwischen 5 und 60 Gew.-% liegen. Um eine gleichförmige Umhüllung der in der Wirbelschicht befindlichen Partikel mit Natriumperborat-monohydrat zu erzielen, ist es besonders zweckmäßig, eine konzentrierte wäßrige Natriumperboratlösung unter Verwendung einer Zweistoffdüse mit vorgeschalteter Mischstrecke zur Mischung der Lösungen und Luft als Treibmittel zu versprühen. Die Mengenströme werden so gewählt, daß das Molverhältnis von NaBO₂ zu H₂O₂ etwa 1 zu 1 beträgt; die Verwendung eines geringen H₂O₂-Unter- oder vorzugsweise Überschusses - bis zu 10 % - ist möglich. Durch die Verwendung einer vorerwähnten Zweistoffdüse mit vorgeschalteter Mischstrecke wird eine sichere und gleichmäßige Durchmischung der Lösungen erzielt; ein Kristallisationsinhibitor ist nicht erforderlich. Vorzugsweise liegt die Wirbelschichttemperatur im Bereich zwischen 50 und 70 °C. Die benötigten Keime, also die Partikel, die kleiner sind als diejenigen des Granulats, können durch Kristallisation mit anschließender Dehydratisierung in wäßriger Phase gewonnen worden sein. Man kann aber auch Keime, die durch Zerkleinerung, etwa durch Abrieb in der Wirbelschicht, oder Mahlen des Granulats entstehen, verwenden. Zweckmäßigerweise beträgt der durch das Wirbelschichtsprühverfahren erhaltene Masseanteil des Granulats mindestens 50 Gew.-%, vorzugsweise mehr als 70 Gew.-%.

Zur Durchführung des Verfahrens kommen übliche Vorrichtungen zur Wirbelschichttrocknung infrage, insbesondere zylinderförmige oder rinnenförmige Wirbelschichttrockner, welche mit Sprühdüsen zum Versprühen der wäßrigen Lösung der Hüllkomponente ausgestattet sind. Das Verfahren kann auch einfach in mehrzonigen rinnenförmigen Fließbetttrocknern, wie sie ohnehin oft zur Trocknung von durch Kristallisation gewonnenem Natriumperborat-tetrahydrat oder zur Dehydratisierung desselben im Einsatz sind, durchgeführt werden: Hierbei wird in der oder in den ersten Zonen das kristallisierte Produkt besprüht und in der letzten Zone zu Ende getrocknet.

Durch die gezielte Einstellung der Kontaktzeit zwischen dem Zusammenführen der zur Reaktion eingesetzten Lösungen und dem Versprühen ist es überraschenderweise möglich, die Lösezeit einzustellen. Ein unmittelbar vor oder in der Düse erfolgendes Zusammenführen der Lösungen führt zu einem Produkt mit zu langer Losezeit (=geringe Lösegeschwindigkeit). Eine Kontaktzeit von mindestens 15 Sekunden führt zur erfindungsgemäßen Eigenschaftskombination. Eine Kontaktzeit von mehr als 2 Minuten ist im allgemeinen nicht nötig.

Durch das erfindungsgemäße Verfahren ist es möglich geworden, ohne den Zusatz von Tensiden Natriumperborat-monohydrat zu erhalten, das die anspruchsgemäßen Eigenschaften aufweist. Die Lösezeit ist dabei wesentlich kürzer, als sie bisher unter Mitverwendung von Tensiden erzielt wurde.

### Beispiele 1 und 2

- Vorlage:: 1000 g Natriumperborat-monohydrat (Fraktion 0,2 - 0,3 mm) (hergestellt durch Dehydratisierung von Natriumperborat-tetrahydrat)
- Temp. Wirbelschicht:: 64 - 68 °C
- Temp. Zuluft:: 80 - 85 °C
- Luftmenge:: 70 - 90 Nm³/h
- Düsenluft:: 1,5 bar, 3,7 Nm³/h, 25 °C
- Wasserstoffperoxidlösung:: 50 Gew.-% 25 °C 165 g/h dosiert stabilisiert mit 5,18 g/l MgSO₄ ^{·} 7 H₂O
- Natriummetaboratlösung:: 6 mol/l 40 °C 547 g/h dosiert
- Molverhältnis H₂O₂ / NaBO₂:: 1,01
- Düse:: Zweistoffdüse mit vorgeschalteter Mischstrecke
- Verweilzeit (=Kontaktzeit) in der Mischstrecke:: 120 Sekunden

| Produkteigenschaften | Beispiel 1 | Beispiel 2 |
|---|---|---|
| Keimanteil (%) | 51 | 35 |
| Oₐ (%) | 15,3 | 15,1 |
| Schüttdichte (g/l) | 730 | 820 |
| Abrieb (%) | 3,1 | 2,8 |
| Lösezeit (s) | 39 | 54 |
| BET-Oberfläche (m²/g) | - | 0,4 |
| Anteil 0,2-0,3 mm (%) | 17,0 | 4,0 |
| Anteil 0,3-0,4 mm (%) | 40,7 | 31,2 |
| Anteil 0,4-0,5 mm (%) | 21,6 | 28,4 |
| Anteil 0,5-0,6 mm (%) | 10,7 | 19,6 |

### Beispiel 3

- Vorlage:: 500 g Natriumperborat-monohydrat (Fraktion 0,2 - 0,3 mm)
- Temp. Wirbelschicht:: 60 - 65 °C
- Temp. Zuluft:: 71 - 84 °C
- Luftmenge:: 50 - 70 Nm³/h
- Düsenluft:: 1,5 bar, 3,3 Nm³/h, 25 °C
- Wasserstoffperoxidlösung:: 50 Gew.-% 25 °C 138,5 g/h dosiert stabilisiert mit 5,18 g/l MgSO₄ ^{·} 7 H₂O
- Natriummetaboratlösung:: 6 mol/l 60 °C 464,1 g/h dosiert
- Molverhältnis H₂O₂ / NaBO₂:: 1,00
- Düse:: Zweistoffdüse mit vorgeschalteter Mischstrecke
- Verweilzeit in der Mischstrecke:: 60 Sekunden

| Produkteigenschaften | Beispiel 3 |
|---|---|
| Keimanteil (%) | 17 |
| Oₐ (%) | 15,4 |
| Schüttdichte (g/l) | 845 |
| Abrieb (%) | 1,0 |
| Lösezeit (s) | 45 |
| BET-Oberfläche (m²/g) | - |
| Anteil 0,2-0,3 mm (%) | 0,5 |
| Anteil 0,3-0,4 mm (%) | 15,5 |
| Anteil 0,4-0,5 mm (%) | 56,5 |
| Anteil 0,5-0,6 mm (%) | 17,0 |

### Beispiel 4 (nicht erfindungsgemäß)

- Vorlage:: 500 g Natriumperborat-monohydrat (Fraktion 0,2 - 0,3 mm)
- Temp. Wirbelschicht:: 62 - 65 °C
- Temp. Zuluft:: 78 - 82 °C
- Luftmenge:: 50 - 70 Nm³/h
- Düsenluft:: 1,5 bar, 3,3 Nm³/h, 25 °C
- Wasserstoffperoxidlösung:: 50 Gew.-% 25 °C 96,8 g/h dosiert stabilisiert mit 5,18 g/l MgSO₄ ^{.} 7 H₂O
- Natriummetaboratlösung:: 6 mol/l 60 °C 314 g/h dosiert
- Molverhältnis H₂O₂ / NaBO₂:: 1,03
- Düse:: Zweistoffdüse mit vorgeschalteter Mischstrecke
- Verweilzeit in der Mischstrecke:: 2 Sekunden

| Produkteigenschaften | Beispiel 4 |
|---|---|
| Keimanteil (%) | 42 |
| Oₐ (%) | 15,3 |
| Schüttdichte (g/l) | 715 |
| Abrieb (%) | 7,2 |
| Lösezeit (s) | 98 |
| BET-Oberfläche (m²/g) | 0,9 |
| Anteil 0,2-0,3 mm (%) | 14,2 |
| Anteil 0,3-0,4 mm (%) | 57,8 |
| Anteil 0,4-0,5 mm (%) | 13,7 |
| Anteil 0,5-0,6 mm (%) | 10,6 |

### Beispiel 5 (nicht erfindungsgemäß)

- Vorlage:: 500 g Natriumperborat-monohydrat (Fraktion 0,2 - 0,3 mm)
- Temp. Wirbelschicht:: 63 - 67 °C
- Temp. Zuluft:: 75 - 83 °C
- Luftmenge:: 50 - 70 Nm³/h
- Düsenluft:: 1,5 bar, 3,4 Nm³/h, 25 °C
- Wasserstoffperoxidlösung:: 50 Gew.-% 25 °C 92,4 g/h dosiert stabilisiert mit 5,18 g/l MgSO₄ ^{·} 7 H₂O
- Natriummetaboratlösung:: 6 mol/l 60 °C 303 g/h dosiert
- Molverhältnis H₂O₂ / NaBO₂:: 1,02
- Düse:: Zweistoffdüse mit vorgeschalteter Mischstrecke
- Verweilzeit in der Mischstrecke:: < 1 Sekunde

| Produkteigenschaften | Beispiel 5 |
|---|---|
| Keimanteil (%) | 23 |
| Oₐ (%) | 15,5 |
| Schüttdichte (g/l) | 816 |
| Abrieb (%) | 5,2 |
| Lösezeit (s) | 132 |
| BET-Oberfläche (m²/g) | - |
| Anteil 0,2-0,3 mm (%) | 26,4 |
| Anteil 0,3-0,4 mm (%) | 33,7 |
| Anteil 0,4-0,5 mm (%) | 20,8 |
| Anteil 0,5-0,6 mm (%) | 13,8 |

## Patentansprüche

1. Verfahren zur Herstellung von Natriumperboratmonohydrat in Form eines Granulats mit der Eigenschaftskombination (a) Aktivsauerstoff (Oₐ) von mindestens 14 Gew.-%, (b) Schüttgewicht nach ISO 3424 von mindestens 600 g/l, (c) Abriebindex nach ISO 5937 von weniger als 8 % und (d) Lösezeit bei 15 °C in Wasser für 95 % bei einer Einsatzmenge von 2 g/l von weniger als 2 Minuten, durch Besprühen von Natriumperborat-monohydratpartikeln, die kleiner sind als diejenigen des herzustellenden Granulats, in einer Wirbelschicht bei einer Wirbelschichttemperatur im Bereich von 40 bis 95 °C mit einer durch Zusammenführen und Mischen einer wäßrigen Wasserstoffperoxidlösung mit einer wäßrigen Natriummetaboratlösung hergestellten wäßrigen Natriumperboratlösung und gleichzeitigem Verdampfen von Wasser,
dadurch gekennzeichnet,
daß man die wäßrige Natriumperboratlösung 15 bis 120 Sekunden nach dem Zusammenführen der Wasserstoffperoxid- und der Natriummetaboratlösung versprüht.

## Claims

1. Process for the preparation of sodium perborate monohydrate in the form of granules having the combination of properties of (a) active oxygen (Oₐ) of at least 14 wt.%, (b) bulk density according to ISO 3424 of at least 600 g/l, (c) abrasion index according to ISO 5937 of less than 8 % and (d) dissolving time at 15 °C in water for 95 % at an amount employed of 2 g/l of less than 2 minutes, by spraying sodium perborate monohydrate particles which are smaller than those of the granules to be prepared, in a fluidized bed at a fluidized bed temperature in the range from 40 to 95 °C, with an aqueous sodium perborate solution prepared by bringing together and mixing an aqueous hydrogen peroxide solution with an aqueous sodium metaborate solution and simultaneously evaporating off water,
characterized in that
the aqueous sodium perborate solution is sprayed 15 to 120 seconds after the hydrogen peroxide solution and the sodium metaborate solution have been brought together.

## Revendications

1. Procédé pour la préparation de perborate de sodium monohydraté sous forme d'un granulat présentant la combinaison de propriétés (a) oxygène actif (Oₐ) d'au moins 14 % en poids, (b) densité apparente, selon la norme ISO 3424, d'au moins 600 g/l, (c) indice d'abrasion, selon la norme ISO 5937, inférieur à 8 % et (d) durée de solubilisation, à 15 °C dans de l'eau, de 95 % pour une quantité mise en oeuvre de 2 g/l inférieure à 2 minutes, par pulvérisation, sur des particules de perborate de sodium monohydraté, qui sont inférieures à celles du granulat à préparer, dans un lit fluidisé à une température de lit fluidisé dans une plage de 40 à 95 °C, d'une solution aqueuse de perborate de sodium, préparée en assemblant et en mélangeant une solution aqueuse de peroxyde d'hydrogène et une solution aqueuse de tétraborate de sodium et par évaporation simultanée de l'eau, caractérisé en ce que la solution aqueuse de perborate de sodium est pulvérisée 15 à 120 secondes après l'assemblage de la solution de peroxyde d'hydrogène et de la solution de tétraborate de sodium.
